# FASCICULE DE BREVET EUROPEEN

(11) **EP 1 076 503 B1**
(45) Date de publication et mention de la délivrance du brevet: **03.09.2003**
(21) Numéro de dépôt: 99918045.8
(22) Date de dépôt: 11.05.1999
(51) Int. Cl.: A47J 31/54

(54) **CHAUDIERE POUR APPAREIL ELECTROMENAGER ET APPAREIL ELECTROMENAGER COMPORTANT UNE TELLE CHAUDIERE**
WASSERERHITZER FÜR HAUSHALTSGERÄT UND HAUSHALTSGERÄT MIT EINEM SOLCHEN WASSERERHITZER
BOILER FOR HOUSEHOLD ELECTRICAL APPLIANCE AND HOUSEHOLD ELECTRICAL APPLIANCE COMPRISING SAME

(30) Priorité: 15.05.1998 FR 9806195
(43) Date de publication de la demande: 21.02.2001
(73) Titulaire: SEB S.A., 69130 Ecully (FR)
(72) Inventeur: IMBEAU, Jacques, F-14320 Feuguerolles Bully (FR)
(74) Mandataire: Kiehl, Hubert
(86) Numéro de dépôt international: FR9901116
(87) Numéro de publication internationale: WO99059453

(56) Documents cités:
- EP-A- 0 485 211
- WO-A-98/27853
- FR-A- 2 386 295

## Description

La présente invention concerne une chaudière pour un appareil à usage domestique utilisant de l'eau chaude et/ou de la vapeur, comportant un corps cylindrique à axe vertical qui définit une chambre et qui présence une entrée pour l'introduction d'eau dans la chambre, un moyen de chauffage électrique associé au corps et comprenant un élément chauffant à résistance électrique sérigraphiée pour chauffer l'eau admise dans la chambre, ledit corps présentant également une sortie pour l'extraction de l'eau chaude ou de la vapeur formée dans la chambre.

Dans des chaudières connues de ce genre, l'élément chauffant à résistance sérigraphiée est disposé sur toute la hauteur de la paroi longitudinale du corps. On a constaté qu'une telle résistance chauffante, si elle présente de nombreux avantages quant à la puissance électrique admissible et à la qualité des transferts thermiques avec l'eau à chauffer, présente néanmoins l'inconvénient de- subir des dégradations importantes si elle est soumise à des cycles répétés de chauffage "à vide", c'est-à-dire en l'absence d'eau.

L'invention a notamment pour but de remédier à cet inconvénient, et de réaliser une chaudière pour appareil électroménager, du type exposé ci-dessus, telle que la résistance sérigraphiée soit exempte de phase de chauffe à vide.

Selon l'invention, l'élément chauffant à résistance sérigraphiée est réalisé sous la forme d'une nappe qui s'étend sur une partie de la hauteur de la paroi longitudinale du corps, sensiblement à partir de l'extrémité inférieure du corps, et qui est associée à des moyens de protection thermique propres à couper l'alimentation de l'élément chauffant lorsque le niveau d'eau dans la chambre est situé au-dessous de l'extrémité supérieure de la nappe.

Ainsi, la résistance sérigraphiée ne présente pas, en phase de chauffe, de portion en regard d'une portion de paroi émergée.

Suivant un mode de réalisation avantageux de l'invention, les moyens de protection thermique sont reliés à une pompe destinée à alimenter la chambre en eau froide lorsque le niveau d'eau est situé au-dessous de l'extrémité supérieure de la nappe.

Grâce à cette disposition, le niveau d'eau dans la chambre est toujours amené au-dessus du niveau supérieur de la résistance sérigraphiée, durant toute la phase de chauffe.

Suivant une autre caractéristique de l'invention, les moyens de protection thermique comprennent au moins un thermostat placé en série avec la résistance sérigraphiée, et situé au voisinage de l'extrémité supérieure de la nappe.

Grâce à cette disposition, on réalise de façon simple et peu coûteuse un système qui coupe le circuit d'alimentation de la résistance sérigraphiée, lorsque la température environnant l'extrémité supérieure de ladite résistance sérigraphiée dépasse un seuil prédéterminé, indiquant également que le niveau d'eau est passé au-dessous du niveau de l'extrémité supérieure de la résistance sérigraphiée.

L'invention vise également un appareil électroménager comportant une chaudière conforme à l'invention.

Cet appareil électroménager est par exemple constitué par une cafetière du type "espresso".

Les caractéristiques et avantages de l'invention ressortiront d'ailleurs de la description qui va suivre, à titre d'exemple non limitatif, en référence aux dessins annexés, dans lesquels:
- la figure 1 est une vue schématique, avec arrachement, d'une chaudière suivant l'invention;
- la figure 2 est un schéma de câblage de l'élément chauffant suivant un premier mode de réalisation;
- la figure 3 est un schéma de câblage de l'élément chauffant suivant une variante de réalisation.

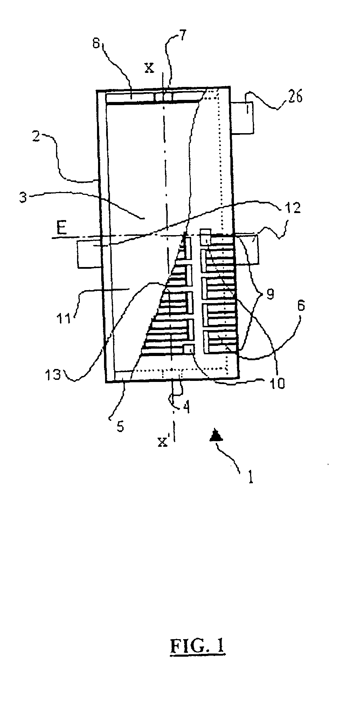

Dans l'exemple de réalisation représenté à la figure 1, on a désigné en 1 une chaudière conforme à l'invention et destinée à être utilisée dans une cafetière du type "espresso" pour y générer, à l'aide d'un sélecteur, soit de l'eau chaude avec de la vapeur, soit de l'eau chaude uniquement, soit de la vapeur seule.

La chaudière 1 comporte un corps cylindrique 2 à axe vertical qui définit une chambre 3 et qui présente, à son extrémité inférieure, une entrée 4 pratiquée dans un bouchon inférieur 5 pour l'introduction d'eau dans la chambre 3, un moyen de chauffage électrique 6 associé au corps 2 et comprenant un élément chauffant à résistance sérigraphiée 13 pour chauffer l'eau admise dans la chambre 3, ledit corps présentant, à son extrémité supérieure, une sortie 7 pratiquée dans un bouchon supérieur 8 pour l'extraction de l'eau chaude ou de la vapeur formée dans la chambre 3.

L'entrée 4 et la sortie 7 peuvent également être prévues toutes les deux dans la partie inférieure du corps 2, et comporter des soupapes destinées à contrôler les mouvements d'eau froide en entrée et d'eau chaude en sortie.

Selon l'invention, l'élément chauffant à résistance sérigraphiée 13 est réalisé sous la forme d'une nappe 9 qui s'étend sur une partie de la hauteur de la paroi longitudinale du corps 2, sensiblement à partir de l'extrémité inférieure du corps 2, la résistance sérigraphiée présentant un plot de connexion 10 à une source d'alimentation électrique à chacune de ses extrémités. Le moyen de chauffage 6 comprend en outre des moyens de protection thermique 12 de l'élément chauffant, qui coupent l'alimentation de la résistance sérigraphiée 13 lorsque le niveau d'eau dans la chambre 3 est situé au-dessous de l'extrémité supérieure de la nappe 9. Cette extrémité supérieure est schématisée par un trait mixte référencé E sur la figure 1.

Afin d'éviter la migration de particules nocives dans l'eau, il est proposé de réaliser le corps cylindrique 2 dans un acier inoxydable. Bien entendu ce corps pourrait être en acier ferritique, ceci dans un but de fabrication économique.

L'élément chauffant est lui, formé par au moins une piste métallique sérigraphiée disposée sur un support isolant électriquement.

De préférence, la nappe 9 est annulaire et forme ainsi un fourreau autour du corps cylindrique 2, et l'élément chauffant est formé par une pluralité de pistes sérigraphiées annulaires connectées électriquement entre elles, par exemple par des tronçons de pistes en argent parallèles à l'axe du corps 2.

Le support isolant est avantageusement constitué par au moins une couche de matériau émaillé.

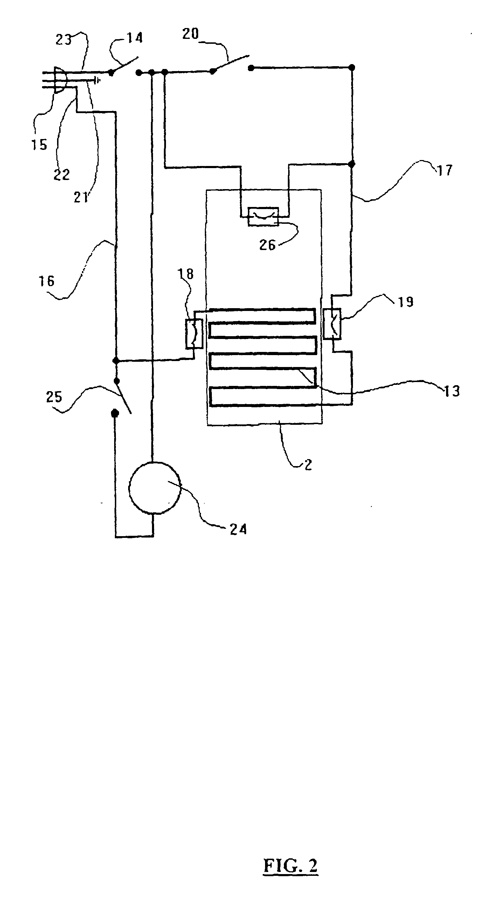

Sur la figure 2, on a représenté un schéma de câblage de l'élément chauffant utilisé dans un premier mode de réalisation de l'invention, le corps cylindrique 2 y étant schématiquement délimité.

Le circuit électrique suivant ce premier mode comporte un connecteur électrique 15 pour raccordement à une alimentation du type fourni par le réseau domestique, dont une voie 21 est reliée à la masse de l'appareil. Une deuxième voie 22 est reliée à une première borne de la résistance sérigraphiée 13 et une troisième voie 23 à une seconde borne de la résistance sérigraphiée 13, par l'intermédiaire respectivement d'une première et deuxième branches de circuit 16, 17. La première branche 16 présente un premier thermostat 18; la seconde branche 17 présente un deuxième thermostat 19, un premier interrupteur de mise en chauffe 14 actionnable par l'utilisateur, un deuxième interrupteur 20 de sélection de mode "vapeur", également actionnable par l'utilisateur, et un troisième thermostat 26 situé dans une partie supérieure de la chambre 3 et placé en dérivation par rapport au deuxième interrupteur 20. Ce montage permet, si l'utilisateur choisit le mode "vapeur" en fermant le deuxième interrupteur 20, de court-circuiter le troisième thermostat 26, et dans le cas contraire, de provoquer la coupure de l'alimentation de la résistance sérigraphiée 13 lorsque de la vapeur se forme dans la chambre 3.

Les moyens de protection thermique 12 de l'élément chauffant sont constitués des premier et deuxième thermostats 18, 19 placés en série avec la résistance sérigraphiée 13, et situés au voisinage de l'extrémité supérieure E de la nappe 9. On conçoit qu'ainsi, lorsque le niveau d'eau dans la chambre 3 diminue et passe sous le niveau de l'extrémité supérieure de la nappe 9, une partie de la résistance sérigraphiée 13 est privée d'échanges de chaleur avec le liquide et voit par conséquent sa température augmenter rapidement, ce qui entraîne la coupure du circuit d'alimentation de la résistance sérigraphiée 13 par l'un au moins des premier et deuxième thermostats 18, 19.

Il est également prévu de disposer, parallèlement au circuit d'alimentation de la résistance sérigraphiée 13, une pompe 24 permettant d'alimenter la chambre 3 en eau froide lorsqu'elle est actionnée par l'utilisateur au moyen de l'interrupteur 25.

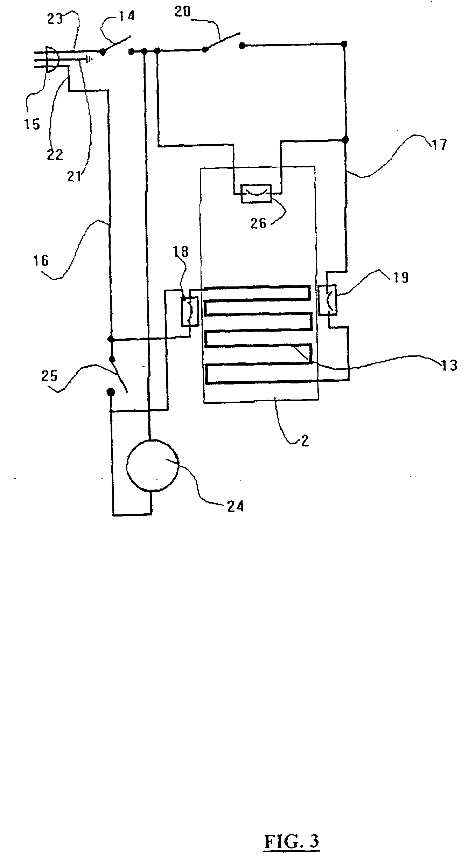

Suivant un mode de réalisation avantageux de l'invention, et tel que représenté en figure 3, la pompe 24 peut être activée automatiquement lorsque le premier thermostat 18 coupe le circuit d'alimentation de la résistance sérigraphiée 13, à savoir lorsque le niveau d'eau est au-dessous de l'extrémité supérieure E de la nappe 9, en court-circuitant l'interrupteur 25 de commande manuelle de la pompe 24.

## Revendications

1. Chaudière pour appareil électroménager, comportant un corps cylindrique (2) à axe vertical qui définit une chambre (3) et qui' présente une entrée (4) pour l'introduction d'eau dans la chambre (3), un moyen de chauffage électrique (6) associé au corps (2) et comprenant un élément chauffant à résistance électrique sérigraphiée (13) pour chauffer l'eau admise dans la chambre (3), ledit corps (2) présentant également une sortie (7) pour l'extraction de l'eau chaude ou de la vapeur formée dans la chambre (3),
**caractérisée en ce que** l'élément chauffant à résistance sérigraphiée (13) est réalisé sous la forme d'une nappe (9) qui s'étend sur une partie de la hauteur de la paroi longitudinale du corps (2), sensiblement à partir de l'extrémité inférieure du corps (2), et qui est associée à des moyens de protection thermique (12) propres à couper l'alimentation de l'élément chauffant (13) lorsque le niveau d'eau dans la chambre (3) est situé au-dessous de l'extrémité supérieure de la nappe (9).

2. Chaudière selon la revendication 1,
**caractérisée en ce que** les moyens de protection thermique (12) sont reliés à une pompe (24) destinée à alimenter la chambre (3) en eau froide lorsque le niveau d'eau est situé au-dessous de l'extrémité supérieure de la nappe (9).

3. Chaudière selon l'une quelconque des revendications 1 et 2,
**caractérisée en ce que** les moyens de protection thermique (12) comprennent au moins un thermostat (18, 19) placé en série avec la résistance sérigraphiée (13), et situé au voisinage de l'extrémité supérieure de la nappe (9).

4. Chaudière selon l'une quelconque des revendications 1 à 3,
**caractérisée en ce que** le corps (2) est réalisé en acier inoxydable.

5. Chaudière selon l'une quelconque des revendications 1 à 4,
**caractérisée en ce que** l'élément chauffant est formé par au moins une piste métallique sérigraphiée disposée sur un support isolant électriquement.

6. Chaudière selon la revendication 5,
**caractérisée en ce que** la nappe (9) est annulaire et forme ainsi un fourreau autour du corps cylindrique (2).

7. Chaudière selon la revendication 6,
**caractérisée en ce que** l'élément chauffant est formé par une pluralité de pistes sérigraphiées annulaires connectées électriquement entre elles.

8. Chaudière selon l'une quelconque des revendications 5 à 7,
**caractérisée en ce que** le support isolant électriquement est constitué d'un matériau émaillé.

9. Appareil électroménager comportant une chaudière conforme à l'une des revendications 1 à 8.

10. Appareil électroménager selon la revendication 9,
**caractérisé en ce qu'**il est constitué par une cafetière du type "espresso".

## Patentansprüche

1. Wassererhitzer für ein elektrisches Haushaltsgerät mit einem zylindrischen Körper (2) mit vertikaler Achse, der eine Kammer (3) begrenzt und der einen Einlaß (4) zum Einleiten von Wasser in die Kammer (3) und eine zum Körper (2) gehörende elektrische Heizvorrichtung (6) mit einem Heizelement mit aufgedrucktem elektrischen Widerstand (13) zum Erhitzen des in die Kammer (3) eingeleiteten Wassers aufweist, wobei der Körper (2) auch einen Auslaß (7) für die Abgabe des heißen Wassers oder des in der Kammer (3) gebildeten Dampfes aufweist, **dadurch gekennzeichnet, daß** das Heizelement mit gedrucktem Widerstand (13) in Form einer Schicht oder Platte (9) ausgebildet ist, die sich über einen Teil der Höhe der Längswand des Körpers (2) im wesentlichen vom unteren Ende des Körpers (2) ausgehend erstreckt und die einer Wärmeschutzvorrichtung (12) zugeordnet ist, welche die Stromversorgung des Heizelements (13) unterbrechen kann, wenn der Wasserstand in der Kammer (3) unterhalb des oberen Endes der Schicht (9) liegt.

2. Wassererhitzer nach Anspruch 1, **dadurch gekennzeichnet, daß** die Wärmeschutzvorrichtung (12) mit einer Pumpe (24) verbunden ist, die zur Speisung der Kammer (3) mit Kaltwasser dient, wenn der Wasserstand unterhalb des oberen Endes der Schicht (9) liegt.

3. Wassererhitzer nach einem der Ansprüche 1 und 2, **dadurch gekennzeichnet, daß** die Wärmeschutzvorrichtung (12) mindestens einen Thermostaten (18, 19) aufweist, der in Reihe mit dem gedruckten Widerstand (13) liegt und in der Nähe des oberen Endes der Schicht (9) angeordnet ist.

4. Wassererhitzer nach einem der Ansprüche 1 bis 3, **dadurch gekennzeichnet, daß** der Körper (2) aus rostfreiem Stahl hergestellt ist.

5. Wassererhitzer nach einem der Ansprüche 1 bis 4, **dadurch gekennzeichnet, daß** das Heizelement von mindestens einer durch im Siebdruck hergestellten Metallstrecke gebildet ist, die auf einem elektrisch isolierenden Träger angeordnet ist.

6. Wassererhitzer nach Anspruch 5, **dadurch gekennzeichnet, daß** die Schicht (9) ringförmig ist und so eine Hülse rings am zylindrischen Körper (2) bildet.

7. Wassererhitzer nach Anspruch 6, **dadurch gekennzeichnet, daß** das Heizelement von einer Mehrzahl von ringförmigen gedruckten Strecken gebildet ist, die untereinander elektrisch verbunden sind.

8. Wassererhitzer nach einem der Ansprüche 5 bis 7, **dadurch gekennzeichnet, daß** der elektrisch isolierende Träger aus einem emaillierten Material besteht.

9. Elektrisches Haushaltsgerät mit einem Wassererhitzer gemäß einem der Ansprüche 1 bis 8.

10. Elektrisches Haushaltsgerät nach Anspruch 9, **dadurch gekennzeichnet, daß** es eine "Espresso"-Kaffeemaschine ist.

## Claims

1. Boiler for a domestic electrical appliance, comprising a cylindrical body (2) with a vertical axis which defines a chamber (3) and which has an inlet (4) for introducing water into the chamber (3), an electrical heating means (6) associated with the body (2) and comprising a heating element with a screen-printed electrical element (13) for heating the water admitted into the chamber (3), said body (2) also having an outlet (7) for extracting hot water or steam formed in the chamber (3), **characterised in that** the heating element with the screen-printed element (13) is produced in the form of a layer (9) which extends over part of the height of the longitudinal wall of the body (2), substantially from the bottom end of the body (2), and which is associated with thermal protection means (12) able to cut off the power supply of the heating element (13) when the water level in the chamber (3) is situated below the top end of the layer (9).

2. Boiler according to claim 1, **characterised in that** the thermal protection means (12) are connected to a pump (24) intended to supply the chamber (3) with cold water when the water level is situated below the top end of the layer (9).

3. Boiler according to anyone of claims 1 and 2, **characterised in that** the thermal protection means (12) comprise at least one thermostat (18, 19) placed in series with the screen-printed element (13) and situated in the vicinity of the top end of the layer (9).

4. Boiler according to anyone of claims 1 to 3, **characterised in that** the body (2) is produced from stainless steel.

5. Boiler according to anyone of claims 1 to 4, **characterised in that** the heating element is formed by at least one screen-printed metallic track disposed on an electrically insulating support.

6. Boiler according to claim 5, **characterised in that** the layer (9) is annular and thus forms a sheath around the cylindrical body (2).

7. Boiler according to claim 6, **characterised in that** the heating element is formed by a plurality of annular screen-printed tracks electrically connected together.

8. Boiler according to anyone of claims 5 to 7, **characterised in that** the electrically insulating support consists of an enamelled material.

9. Domestic electrical appliance comprising a boiler according to one of claims 1 to 8.

10. Domestic electrical appliance according to claim 9, **characterised in that** its consists of a coffee maker of the "espresso" type.
